# EUROPEAN PATENT APPLICATION

(11) **EP 4 501 638 A1**
(43) Date of publication of application: **05.02.2025**
(21) Application number: 23775024.5
(22) Date of filing: 23.03.2023
(51) Int. Cl.: B32B 27/40, B29C 39/20, B29C 39/24, C08G 18/06

(54) **BUFFER MATERIAL, EXTERIOR MATERIAL, AND ROBOT COMPONENT**

(30) Priority: 25.03.2022 JP 2022049751; 25.03.2022 JP 2022049752
(71) Applicant: Mitsui Chemicals, Inc., Tokyo 104-0028 (JP)
(72) Inventor: SUGAWARA, Kei, Sodegaura-shi, Chiba 299-0265 (JP); KONDO, Takahiro, Sodegaura-shi, Chiba 299-0265 (JP); KAGEOKA, Masakazu, Sodegaura-shi, Chiba 299-0265 (JP)
(74) Representative: Hoffmann Eitle
(86) International application number: PCT/JP2023/011516
(87) International publication number: WO 2023/182430

(57) **Abstract**

A buffer material (1) includes a gel layer (3) and a skin layer (4). The gel layer (3) includes a polyurethane gel. The gel layer (3) has a storage modulus (E'_{gel}) at 23°C of 0.01 MPa or more and 10 MPa or less. The skin layer (4) is disposed on one surface of the gel layer (3). The skin layer (4) has a 100% modulus of less than 5.0 MPa or less, and/or the skin layer (4) has a fine uneven structure in a surface thereof and the surface of the skin layer (4) has an arithmetic average roughness Ra of more than 0 µm and 10 µm or less, as measured according to the following conditions:
Measurement conditions of arithmetic average roughness Ra; a spherical contact having a diameter ϕ of 1.6 mm, a specification load of 0.4 gf, a measurement length of 40 mm, a cutoff wavelength of 0.8 mm, and a measurement speed of 0.15 mm/sec.

## Description

### TECHNICAL FIELD

The present invention relates to a buffer material, an exterior material, and a robot component.

### BACKGROUND ART

Conventionally, gels have been known as buffer materials. Furthermore, it has been known to dispose a coat layer on a surface of such a gel. To be more specific, the following polyurethane gel has been known, for example. That is, the polyurethane gel includes a gel layer and a coat layer that covers the gel layer. The gel layer is produced by allowing at least aliphatic polyisocyanate having an average functionality of more than 2.0 to react with polyol having an average functionality of 3.0 or less. The coat layer is produced by allowing at least aliphatic diisocyanate and/or alicyclic diisocyanate to react with a bifunctional active hydrogen compound (see, for example, Patent Document 1).

### Citation List

### Patent Document

Patent Document 1: WO 2017/010422

### SUMMARY OF THE INVENTION

### PROBLEM TO BE SOLVED BY THE INVENTION

Meanwhile, depending on the use, buffer materials are required to have an improved feel to the touch. To be more specific, smoothness in sliding is required. Furthermore, a high level of smoothness in sliding may be required.

The present invention provides a buffer material having excellent feel to the touch, an exterior material, and a robot component.

### MEANS FOR SOLVING THE PROBLEM

The present invention [1] includes a buffer material including a gel layer and a skin layer, in which the gel layer includes a polyurethane gel, the gel layer having a storage modulus (E'_{gel}) at 23°C of 0.01 MPa or more and 10 MPa or less, the skin layer is disposed on one surface of the gel layer, the skin layer having a 100% modulus of 5.0 MPa or less, and/or the skin layer having a fine uneven structure in a surface thereof, and the surface of the skin layer having an arithmetic average roughness Ra of more than 0 µm and 10 µm or less, as measured according to the following conditions.

Measurement conditions of arithmetic average roughness Ra; a spherical contact having a diameter ϕ of 1.6 mm, a specification load of 0.4 gf, a measurement length of 40 mm, a cutoff wavelength of 0.8 mm, and a measurement speed of 0.15 mm/sec.

The present invention [2] includes the buffer material described in [1], in which the skin layer has an average thickness of 10 µm or more and 1000 µm or less.

The present invention [3] includes the buffer material described in [1] or [2], further including a foam layer, in which the foam layer is disposed on an other surface opposing to one surface of the gel layer, the foam layer has an average thickness of 1000 µm or more and 50000 µm or less, and the gel layer has an average thickness of 500 µm or more and 10000 µm or less.

The present invention [4] includes the buffer material described in [3], in which the foam layer has a density of 80 kg/m³ or more and 200 kg/m³ or less, and the gel layer has a density of 500 kg/m³ or more and 1200 kg/m³ or less.

The present invention [5] includes a buffer material including the buffer material described in any one of the above-described [1] to [4].

The present invention [6] includes a robot component including the buffer material described in any one of the above-described [1] to [4].

### EFFECTS OF THE INVENTION

The buffer material, exterior material, and robot component according to the present invention include a gel layer having a predetermined storage modulus, and a skin layer disposed on one surface of the gel layer. The skin layer has a 100% modulus of less than a predetermined value, and/or the skin layer has a fine uneven structure in a surface thereof and the surface of the skin layer has an arithmetic average roughness Ra of less than a predetermined value. Therefore, the buffer material, exterior material, and robot component according to the present invention have an excellent texture.

### BRIEF DESCRIPTION OF THE DRAWINGS

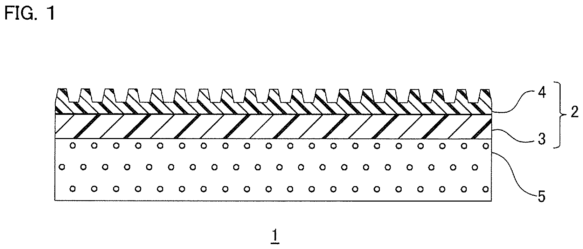

FIG. 1 is a schematic configuration diagram illustrating an embodiment of a buffer material of the present invention.

### DESCRIPTION OF THE EMBODIMENTS

In FIG. 1, a buffer material 1 includes a skinned polyurethane gel 2. The skinned polyurethane gel 2 includes a gel layer 3 and a skin layer 4 disposed on one surface of the gel layer 3. In FIG. 1, one side is the upper side on the plane of the sheet. The other side relative to one side is the lower side on the plane of the sheet.

The gel layer 3 includes a polyurethane gel. The gel layer 3 preferably consists of a polyurethane gel. The polyurethane gel has excellent elasticity. Therefore, when the gel layer 3 is a polyurethane gel, the buffer material 1 has excellent elasticity and excellent buffering performance.

The polyurethane gel is a super-low hardness polyurethane elastomer. The polyurethane gel is defined by its storage modulus. The polyurethane gel has a storage modulus (E') at 23°C of 0.01 MPa or more and 10 MPa or less. The storage modulus (E') of the polyurethane gel is preferably within a range of the storage modulus of the gel layer 3 to be described later.

The storage modulus is a value at 23°C when the temperature dependency of the dynamic viscoelasticity (10 Hz) is measured. The storage modulus is measured in accordance with Examples to be described later (the same applies to the following).

The polyurethane gel contains a reaction product of an isocyanate component for gel and an active hydrogen group-containing component for gel. To be more specific, the polyurethane gel is obtained by allowing the isocyanate component for gel to react with the active hydrogen group-containing component for gel.

Examples of the isocyanate component for gel include a polyisocyanate monomer and a polyisocyanate derivative.

Examples of the polyisocyanate monomer include an aromatic polyisocyanate monomer, an araliphatic polyisocyanate monomer, and an aliphatic polyisocyanate monomer.

Examples of the aromatic polyisocyanate monomer include tolylene diisocyanate (TDI), diphenylmethane diisocyanate (MDI), toluidine diisocyanate (TODI), paraphenylene diisocyanate, and naphthalene diisocyanate (NDI). Examples of the diphenylmethane diisocyanate include 2,2'-diphenylmethane diisocyanate, 2,4'-diphenylmethane diisocyanate, and 4,4'-diphenylmethane diisocyanate. These can be used alone or in combination of two or more.

Examples of the araliphatic polyisocyanate monomer include xylylene diisocyanate (XDI) and tetramethylxylylene diisocyanate (TMXDI). Examples of the xylylene diisocyanate include 1,3-xylylene diisocyanate and 1,4-xylylene diisocyanate. These can be used alone or in combination of two or more.

Examples of the aliphatic polyisocyanate monomer include trimethylene diisocyanate, tetramethylene diisocyanate, pentamethylene diisocyanate (PDI), hexamethylene diisocyanate (HDI), 1,2-propane diisocyanate, 1,2-butane diisocyanate, 2,3-butane diisocyanate, 1,3-butane diisocyanate, 2,4,4-trimethylhexamethylene diisocyanate, 2,2,4-trimethylhexamethylene diisocyanate, and 2,6-diisocyanatemethyl caproate. These can be used alone or in combination of two or more.

The aliphatic polyisocyanate monomer includes an alicyclic polyisocyanate monomer. Examples of the alicyclic polyisocyanate monomer include isophorone diisocyanate (IPDI), norbornene diisocyanate (NBDI), methylene bis(cyclohexyl isocyanate) (H₁₂MDI), and bis(isocyanatomethyl)cyclohexane (H₆XDI). These can be used alone or in combination of two or more.

Examples of the polyisocyanate derivative include a modified product of the above-described polyisocyanate monomer. Examples of the modified product include uretdione-modified product, isocyanurate-modified product, allophanate-modified product, polyol-modified product, biuret-modified product, urea-modified product, oxadiazinetrione-modified product, and carbodiimide-modified product. Further, examples of the polyisocyanate derivative include polymethylenepolyphenylene polyisocyanate (crude MDI, polymeric MDI). These can be used alone or in combination of two or more.

For the isocyanate component for gel, in view of mechanical properties and texture, preferably, a polyisocyanate derivative is used, more preferably, a derivative of an aliphatic polyisocyanate monomer is used, further preferably, an isocyanurate derivative of an aliphatic polyisocyanate monomer is used, particularly preferably, an isocyanurate derivative of pentamethylene diisocyanate is used. For the isocyanate component for gel, a biomass-derived raw material may be blended.

The isocyanate component for gel has an average number of isocyanate groups of, for example, 1.8 or more, preferably 2.0 or more. Further, the average number of isocyanate groups of the isocyanate component for gel is, for example, 4.0 or less, preferably 3.5 or less. When the average number of isocyanate groups of the isocyanate component for gel is within the above range, a gel-type polyurethane resin can be efficiently produced. That is, it is excellent in production efficiency of the polyurethane gel. The average number of isocyanate groups of the isocyanate component for gel is calculated by a known method based on the formulation.

The active hydrogen group-containing component for gel is a component having two or more active hydrogen groups (such as hydroxy groups, amino groups) in one molecule. Examples of the active hydrogen group-containing component for gel include a polyol component for gel. Examples of the polyol component for gel include a macropolyol and a low molecular weight polyol.

The macropolyol is an organic compound having two or more hydroxy groups in one molecule and having a relatively high molecular weight. The macropolyol has a number average molecular weight of, for example, 400 or more, and for example, 20000 or less. The number average molecular weight can be calculated from the hydroxy group equivalent and the average number of hydroxy groups by a known method. The number average molecular weight can be measured in terms of polystyrene molecular weight by gel permeation chromatography (the same applies to the following).

Examples of the macropolyol include polyether polyol, polyester polyol, polycarbonate polyol, polyurethane polyol, epoxy polyol, vegetable oil polyol, polyolefin polyol, acrylic polyol, and vinyl monomer modified polyol. These macropolyols can be used alone or in combination of two or more. For the macropolyol, preferably, a polyether polyol is used.

Examples of the polyether polyol include polyoxyalkylene polyol. Examples of the polyoxyalkylene polyol include polyoxyalkylene (C2-3) polyol, and polytetramethylene ether polyol.

Examples of the polyoxyalkylene (C2-3) polyol include polyoxyethylene polyol, polyoxypropylene polyol, polyoxytriethylene polyol, and polyoxyethylene-polyoxypropylene polyol (random or block copolymer).

Examples of the polytetramethylene ether polyol include a ring-opening polymerization product (crystalline polytetramethylene ether glycol) obtained by cationic polymerization of tetrahydrofuran. Further, examples of the polytetramethylene ether polyol include noncrystalline polytetramethylene ether glycol. In the noncrystalline polytetramethylene ether glycol, tetrahydrofuran is copolymerized with alkyl-substituted tetrahydrofuran and/or dihydric alcohol. The term "crystalline" refers to the property of being solid at 25°C. The term "noncrystalline" refers to the property of being liquid at 25°C.

The macropolyols can be used alone or in combination of two or more. For the macropolyol, preferably, polyether polyol is used, more preferably, polytetramethylene ether polyol is used, more preferably, polytetramethylene ether glycol is used, further preferably, noncrystalline polytetramethylene ether glycol is used.

In the active hydrogen group-containing component for gel, the macropolyol has a number average molecular weight of, for example, 400 or more, preferably 500 or more, more preferably 1000 or more. The number average molecular weight of the macropolyol is, for example, 15000 or less, preferably 13000 or less, more preferably 12000 or less, further preferably 10000 or less, further preferably 5000 or less, particularly preferably 3000 or less.

The low molecular weight polyol is an organic compound having two or more hydroxy groups in one molecule and having a relatively low molecular weight. The molecular weight of the low molecular weight polyol is, for example, 40 or more and less than 400, preferably 300 or less.

Examples of the low molecular weight polyol include dihydric alcohol, trihydric alcohol, and tetra- or higher hydric alcohol. Examples of the dihydric alcohol include ethylene glycol, 1,2-propanediol, 1,3-propanediol, 1,2-butanediol, 1,3-butanediol, 1,4-butanediol, 1,5-pentanediol, 1,6-hexanediol, neopentyl glycol, diethylene glycol, triethylene glycol, and dipropylene glycol. Examples of the trihydric alcohol include glycerin and trimethylolpropane. Examples of the tetra- or higher hydric alcohol include pentaerythritol and diglycerol. For the low molecular weight polyol, polymerization products obtained by addition polymerization of alkylene (C2-3) oxide with dihydric to tetrahydric alcohols so as to have a number average molecular weight of less than 400 are used. These can be used alone or in combination of two or more.

For the low molecular weight polyol, preferably, dihydric alcohol and trihydric alcohol are used, more preferably, dihydric alcohol is used.

The active hydrogen group-containing component for gel preferably does not contain a low molecular weight polyol and contains only a macropolyol. That is, the active hydrogen group-containing component for gel consists of a macropolyol. For the active hydrogen group-containing component for gel, a biomass-derived raw material may be blended.

The average number of hydroxy groups of (the total amount of) the active hydrogen group-containing component for gel is, for example, 2.0 or more. Further, the average number of hydroxy groups of (the total amount of) the active hydrogen group-containing component for gel is, for example, 3.0 or less, preferably 2.5 or less. The average number of hydroxy groups of the active hydrogen group-containing component for gel is particularly preferably 2.0.

(The total amount of) the active hydrogen group-containing component for gel has an average hydroxy value (OH value) of, for example, 10 mg KOH/g or more, preferably 20 mg KOH/g or more, more preferably 30 mg KOH/g or more, more preferably 50 mg KOH/g or more. Further, the average hydroxy value (OH value) of (the total amount of) the active hydrogen group-containing component for gel is, for example, 150 mg KOH/g or less, preferably 120 mg KOH/g or less, more preferably 100 mg KOH/g or less. The hydroxy value is measured in accordance with the description of JIS K 1557-1 (2007).

To produce the gel layer 3, the isocyanate component for gel and the active hydrogen group-containing component for gel are subjected to a urethane-forming reaction in a predetermined mold. The urethane-forming reaction may be a solventless reaction, or a reaction in the presence of a solvent. The urethane-forming reaction is preferably a solventless reaction.

In the urethane-forming reaction, a known method is employed. Examples of the reaction method include one shot method and prepolymer method. Preferably, one shot method is used.

In the urethane-forming reaction, the equivalent ratio (NCO/active hydrogen group) of the isocyanate group in the isocyanate component for gel relative to the active hydrogen group in the isocyanate component for gel is, for example, 0.2 or more, preferably 0.4 or more, and for example, 0.8 or less, preferably 0.7 or less. The reaction temperature is, for example, from room temperature to 120°C. Further, the reaction time is, for example, from 5 minutes to 72 hours. The reaction temperature may be constant, or gradually increased, or gradually decreased.

Then, the reaction of the isocyanate component for gel with the active hydrogen group-containing component for gel produces a gel layer 3. The gel layer 3 is aged, if necessary, and then removed from the mold.

Alternatively, to produce the gel layer 3, the isocyanate component for gel can be allowed to react with the active hydrogen group-containing component for gel in the presence of a plasticizer.

The plasticizer is not particularly limited, and examples thereof include a phthalic acid-based plasticizer, a hydrogenated phthalic acid-based plasticizer, and an adipic acid-based plasticizer. Examples of the phthalic acid-based plasticizer include diundecyl phthalate, dioctyl phthalate, diisononyl phthalate, diisodecyl phthalate, and dibutyl phthalate. Examples of the hydrogenated phthalic acid-based plasticizer include hydrogenated diisononyl phthalate. Examples of the adipic acid-based plasticizer include dioctyl adipate. These are used alone or in combination of two or more.

The ratio of the plasticizer relative to 100 parts by mass of the active hydrogen group-containing component for gel is, for example, 10 parts by mass or more, preferably 50 parts by mass or more, more preferably 100 parts by mass or more. Further, the ratio of the plasticizer relative to 100 parts by mass of the active hydrogen group-containing component for gel is, for example, 1000 parts by mass or less, preferably 500 parts by mass or less, more preferably 200 parts by mass or less.

In the above-described reaction, if necessary, a known additive can be added. Examples of the additive include a urethane-forming catalyst, a filler, a storage stabilizer, an antiblocking agent, a heat-resistant stabilizer, a light-resistant stabilizer, an ultraviolet absorber, an antioxidant, an antifoaming agent, a mold releasing agent, a pigment, a dye, a lubricant, and a hydrolysis inhibitor. The blending ratio of the additive is appropriately set.

The timing of the addition of the additive is not particularly limited. For example, the additive may be added in the isocyanate component for gel. Alternatively, the additive may be added in the active hydrogen group-containing component for gel. Alternatively, the additive may be added to both the isocyanate component for gel and the active hydrogen group-containing component for gel. Further, the additive may be added during mixing of the isocyanate component for gel and the active hydrogen group-containing component for gel.

The gel layer 3 has a storage modulus (E'_{gel}) at 23°C of 0.01 MPa or more, preferably 0.03 MPa or more, more preferably 0.05 MPa or more, further preferably 0.07 MPa or more, particularly preferably 0.1 MPa or more. Further, the storage modulus (E'_{gel}) at 23°C of the gel layer 3 is 10 MPa or less, preferably 5 MPa or less, more preferably 1 MPa or less, further preferably 0.5 MPa or less, particularly preferably 0.3 MPa or less. When the storage modulus (E'_{gel}) at 23°C of the gel layer 3 is within the above range, a buffer material having an excellent texture is produced.

The average thickness of the gel layer 3 is set in accordance with the type of the mold and the like. In view of providing a more excellent texture, the gel layer 3 has an average thickness of, for example, 300 µm or more, preferably 500 µm or more, more preferably 1000 µm or more. Further, in view of providing a more excellent texture, the average thickness of the gel layer 3 is, for example, 20000 µm or less, preferably 10000 µm or less, more preferably 5000 µm or less.

The gel layer 3 has a density of, for example, 100 kg/m³ or more, preferably 500 kg/m³ or more, more preferably 800 kg/m³ or more, in view of providing a more excellent texture. Further, the density of the gel layer 3 is, for example, 3000 kg/m³ or less, preferably 2000 kg/m³ or less, more preferably 1200 kg/m³ or less, further preferably 1000 kg/m³ or less, in view of providing a more excellent texture.

The skin layer 4 is disposed in contact with the gel layer 3 on one surface of the gel layer 3. In other words, the skin layer 4 is laminated on the gel layer 3 on the surface side (the upper side on the plane of the sheet) of the gel layer 3. The skin layer 4 has a predetermined modulus to be described later, and/or has a predetermined surface roughness to be described later.

Examples of the skin layer 4 include a polyurethane resin layer. To be more specific, examples of the skin layer 4 include a cured film of polyurethane resin. The cured film of polyurethane resin is formed, for example, by curing a solution and/or a dispersion (coating liquid) containing polyurethane resin. For example, when the skin layer 4 has the predetermined modulus to be described later, the polyurethane resin is designed, for example, so that the 100% modulus of the skin layer 4 is in a range to be described later.

To be more specific, examples of the coating liquid containing polyurethane resin include a one-component curable polyurethane composition, and a two-component curable polyurethane composition. For the coating liquid, preferably, a two-component curable polyurethane composition is used.

The two-component curable polyurethane composition is, for example, a resin kit including a skin-isocyanate component (curing agent) and a skin-active hydrogen group-containing component (main component). The main component and the curing agent are mixed when in use, and the mixture thereof is cured. In this manner, a polyurethane resin layer is formed.

Examples of the skin-isocyanate component (curing agent) include the above-described polyisocyanate monomers, the above-described polyisocyanate derivatives, and the isocyanate group-terminated prepolymers. These can be used alone or in combination of two or more. For the skin-isocyanate component, preferably, an isocyanate group-terminated prepolymer is used.

The isocyanate group-terminated prepolymer is, for example, a reaction product of a first raw material polyisocyanate and a first raw material polyol. Examples of the first raw material polyisocyanate include the above-described polyisocyanate monomers and/or the above-described polyisocyanate derivatives. These can be used alone or in combination of two or more.

For the first raw material polyisocyanate, preferably, a polyisocyanate derivative is used, more preferably, a derivative of an aliphatic polyisocyanate monomer is used, further preferably, an isocyanurate modified product of an aliphatic polyisocyanate monomer is used, further preferably, an isocyanurate derivative of hexamethylene diisocyanate is used.

Examples of the first raw material polyol include the above-described macropolyol and the above-described low molecular weight polyol. These can be used alone or in combination of two or more.

For the macropolyol in the first raw material polyol, preferably, a polyester polyol is used. Examples of the polyester polyol include condensation polyester polyol and ring-opening polyester polyol. Examples of the condensation polyester polyol include adipate-based polyester polyol and phthalic acid-based polyester polyol. Examples of the ring-opening polyester polyol include lactone-based polyester polyol. To be more specific, examples thereof include polycaprolactone polyol. These can be used alone or in combination of two or more. For the polyester polyol, preferably, a ring-opening polyester polyol is used, more preferably, a caprolactone polyol is used.

For the low molecular weight polyol in the first raw material polyol, preferably, the above-described dihydric alcohol is used, more preferably, 1,4-butanediol, 1,5-pentanediol, and 1,6-hexanediol are used, further preferably, 1,6-hexanediol is used.

In the first raw material polyol, the ratio of the macropolyol and the low molecular weight polyol is not particularly limited, and is appropriately set in accordance with the purpose and use.

In the skin-isocyanate component, the isocyanate group-terminated prepolymer is produced by subjecting the first raw material polyisocyanate to a urethane-forming reaction (first urethane-forming reaction) with the first raw material macropolyol at a predetermined equivalent ratio.

To be more specific, the equivalent ratio (NCO/OH) of the isocyanate group in the first raw material polyisocyanate to the hydroxy group in the first raw material macropolyol is, for example, 1.1 or more, preferably 1.4 or more, further preferably 1.5 or more. Further, the equivalent ratio (NCO/OH) of the isocyanate group in the first raw material polyisocyanate to the hydroxy group in the first raw material macropolyol is, for example, 15.0 or less, preferably 5.0 or less, further preferably 3.0 or less.

The reaction temperature is, for example, 20°C or more, preferably 50°C or more. Further, the reaction temperature is, for example, 150°C or less, preferably 120°C or less. The reaction time is 0.5 hours or more, preferably 1 hour or more. Further, the reaction time is, for example, 18 hours or less, preferably 10 hours or less.

In this manner, an isocyanate group-terminated prepolymer is produced as a liquid reaction product resulting from the first urethane-forming reaction.

In the above-described first urethane-forming reaction, as necessary, a known organic solvent can be blended at an appropriate ratio. Further, in the above-described first urethane-forming reaction, as necessary, a known first urethane-forming catalyst can be blended at an appropriate ratio. Furthermore, as necessary, after the above-described first urethane-forming reaction, as necessary, the organic solvent and/or the urethane-forming catalyst can be removed by a known method. In addition, as necessary, after the above-described first urethane-forming reaction, a known organic solvent can be blended at an appropriate ratio to appropriately adjust the solids concentration.

The skin-isocyanate component (curing agent) has an isocyanate group content of, for example, 5.0% by mass or more, more preferably 10.0% by mass or more, more preferably 15.0% by mass or more. Further, the isocyanate group content of the skin-isocyanate component is, for example, 30.0% by mass or less, preferably 25.0% by mass or less.

Examples of the skin-active hydrogen group-containing component (main component) include the above-described macropolyols. These can be used alone or in combination of two or more. For the macropolyol, preferably, polyurethane polyol is used.

The polyurethane polyol is, for example, a reaction product of a second raw material polyisocyanate and a second raw material polyol. Examples of the second raw material polyisocyanate include the above-described polyisocyanate monomers and/or the above-described polyisocyanate derivatives. These can be used alone or in combination of two or more.

For the second raw material polyisocyanate, preferably, a polyisocyanate monomer is used, more preferably, an alicyclic polyisocyanate monomer is used, further preferably, isophorone diisocyanate is used.

Examples of the second raw material polyol include the above-described macropolyol and the above-described low molecular weight polyol. These can be used alone or in combination of two or more.

For the macropolyol in the second raw material polyol, preferably, the above-described polyester polyol and a polycarbonate polyol are used, more preferably, a polycarbonate polyol is used.

Examples of the polyester polyol include the above-described condensation polyester polyol and the above-described ring-opening polyester polyol.

Examples of the polycarbonate polyol include a ring-opening polymerization product of ethylene carbonate using the above-described low molecular weight polyol as an initiator. The ring-opening polymerization product is, for example, a crystalline polycarbonate polyol. Further, examples of the polycarbonate polyol include a copolymer of the above-described ring-opening polymerization product and dihydric alcohol having 4 to 6 carbon atoms. The copolymer is, for example, a noncrystalline polycarbonate polyol. These can be used alone or in combination of two or more. For the polycarbonate polyol, preferably, a noncrystalline polycarbonate polyol is used.

For the low molecular weight polyol in the second raw material polyol, preferably, the above-described dihydric alcohol and trihydric alcohol are used, more preferably, ethylene glycol, 1,4-butanediol, and trimethylolpropane are used.

In the second raw material polyol, the ratio of the macropolyol and the low molecular weight polyol is not particularly limited, and is appropriately set in accordance with the purpose and use.

In the skin-polyol component, the polyurethane polyol is produced by subjecting the second raw material polyisocyanate to a urethane-forming reaction (second urethane-forming reaction) with the second raw material macropolyol at a predetermined equivalent ratio.

To be more specific, the equivalent ratio (OH/NCO) of the hydroxy group in the second raw material macropolyol to the isocyanate group in the second raw material polyisocyanate is, for example, 1.1 or more, preferably 1.4 or more, further preferably 1.5 or more. Further, the equivalent ratio (OH/NCO) of the hydroxy group in the second raw material macropolyol to the isocyanate group in the second raw material polyisocyanate is, for example, 15.0 or less, preferably 10.0 or less, further preferably 5.0 or less.

The reaction temperature is, for example, 20°C or more, preferably 50°C or more. Further, the reaction temperature is, for example, 150°C or less, preferably 120°C or less. The reaction time is 0.5 hours or more, preferably 1 hour or more. Further, the reaction time is, for example, 18 hours or less, preferably 10 hours or less.

In this manner, a polyurethane polyol is produced as a liquid reaction product resulting from the second urethane-forming reaction.

In the above-described second urethane-forming reaction, as necessary, a known organic solvent can be blended at an appropriate ratio. Further, in the above-described second urethane-forming reaction, as necessary, a known urethane-forming catalyst can be blended at an appropriate ratio. Furthermore, as necessary, after the above-described second urethane-forming reaction, as necessary, the organic solvent and/or the urethane-forming catalyst can be removed by a known method. In addition, as necessary, after the above-described second urethane-forming reaction, a known organic solvent can be blended at an appropriate ratio to appropriately adjust the solids concentration.

The skin-active hydrogen group-containing component (main component) has a hydroxy value of, for example, 10 mg KOH/g or more, preferably 50 mg KOH/g or more. Further, the hydroxy value of the skin-active hydrogen group-containing component (main component) is, for example, 7000 mg KOH/g or less, preferably 2000 mg KOH/g or less.

The average number of hydroxy groups of the skin-active hydrogen group-containing component (main component) is, for example, 1.8 or more, preferably 2.0 or more. Further, the average number of hydroxy groups of the skin-active hydrogen group-containing component (main component) is, for example, 4.0 or less, preferably 3.0 or less.

In the two-component curable polyurethane composition, the skin-isocyanate component (curing agent) and the skin-active hydrogen group-containing component (main component) are appropriately selected so that the 100% modulus of the skin layer 4 (polyurethane resin layer) is in the range to be described later, and are then blended at a predetermined ratio.

In this manner, a coating liquid (a coating liquid containing polyurethane resin) for forming the skin layer 4 (polyurethane resin layer) is produced.

When the skin layer 4 does not have the modulus to be described later and has the surface roughness to be described later, the coating liquid containing polyurethane resin is not limited to those described above. For example, the coating liquid containing polyurethane resin may be obtained, for example, as a commercially available product. Alternatively, the coating liquid containing polyurethane resin may be obtained, for example, as a polyurethane composition containing a known skin-isocyanate component and a known skin-active hydrogen group-containing component.

The coating liquid can contain an additive as necessary. Examples of the additive include a known additive used in the coating liquid containing polyurethane resin. To be more specific, examples of the additive include an antioxidant, an ultraviolet absorber, a light-resistant stabilizer, an antifoaming agent, a flame retardant, and a coloring agent. The content ratio of the additive is appropriately set in accordance with the purpose and use. The additive may be blended in the skin-isocyanate component and/or the skin-active hydrogen group-containing component in advance. Alternatively, the additive may be blended during blending of the skin-isocyanate component with the skin-active hydrogen group-containing component. Further, the additive may be blended with the mixture of the skin-isocyanate component and the skin-active hydrogen group-containing component.

The method of forming the skin layer 4 on a surface of the gel layer 3 is not particularly limited, and a known method is employed. For example, first, the coating liquid containing polyurethane resin is applied to and cured on one side (the surface side of the gel layer 3) on the inner surface of a mold for forming the gel layer 3. In this manner, a skin layer 4 is formed on the inner surface of the mold. Next, using the mold including the skin layer 4 on its inner surface, the gel layer 3 is formed. Thereafter, the gel layer 3 and the skin layer 4 are removed from the mold. In this manner, the gel layer 3 with the skin layer 4 on its surface is produced. In this case, the gel layer 3 is bonded to the skin layer 4 by the tackiness of the gel layer 3.

When the skin layer 4 has a fine uneven structure in its surface, the fine uneven structure is composed of a plurality of fine protrusions and recesses. The fine uneven structure is not particularly limited, and is formed by a known method.

For example, in the above-described method, a fine uneven structure (inverted uneven structure) having a reverse pattern of the fine uneven structure of the skin layer 4 is formed on the inner surface of the mold in advance. Then, the coating liquid containing polyurethane resin is applied to and cured on the mold having the inverted uneven structure. In this manner, a skin layer 4 is formed. Along with this, the inverted uneven structure of the mold is transferred to the skin layer 4.

As a result, a fine uneven structure is formed in the skin layer 4.

The method for forming the fine uneven structure is not limited to the above-described method. For example, first, using a mold without the skin layer 4, the gel layer 3 is formed. Then, the coating liquid containing polyurethane resin is applied to the surface of the gel layer 3. A film having an inverted uneven structure is then pressed against the coated film of the solution and/or dispersion of polyurethane resin. In this state, the coated film of the coating liquid is cured. In this manner, a skin layer 4 is formed, and the inverted uneven structure of the film is transferred to the skin layer 4. As a result, a fine uneven structure is formed in the skin layer 4.

When the skin layer 4 does not have a fine uneven structure in its surface, for example, using a mold without the inverted uneven structure, the skin layer 4 is formed.

The skin layer 4 has a predetermined modulus (A), and/or has a predetermined surface roughness (B).

For example, when the skin layer 4 has the predetermined modulus (A), the skin layer 4 has a 100% modulus of 5.0 MPa or less, preferably 4.5 MPa or less, more preferably 4.0 MPa or less, further preferably 3.5 MPa or less, particularly preferably 3.4 MPa or less. Further, the 100% modulus of the skin layer 4 is, for example, 0.1 MPa or more, preferably 0.5 MPa or more, more preferably 1.0 MPa or more, further preferably 1.5 MPa or more, particularly preferably 2.0 MPa or more. The 100% modulus is a stress value at 100% elongation. The 100% modulus is measured in accordance with Examples to be described later. When the 100% modulus of the skin layer 4 is less than the above-described upper limit, a particularly excellent texture is provided.

When the skin layer 4 has the above-described predetermined modulus (A), the skin layer 4 may not have a fine uneven structure in its surface. Preferably, the skin layer 4 has a fine uneven structure in its surface. In such a case, the surface roughness of the skin layer 4 is not particularly limited, and is appropriately set in accordance with the purpose and use. For example, the surface of the skin layer 4 has an arithmetic average roughness Ra of, for example, 10 µm or less, preferably 8.0 µm or less, more preferably 6.0 µm or less, more preferably 5.0 µm or less, particularly preferably 4.0 µm or less. Further, the arithmetic average roughness Ra of the surface of the skin layer 4 is, for example, more than 0 µm, preferably 0.10 µm or more, preferably 0.5 µm or more, more preferably 1.0 µm or more, further preferably 1.5 µm or more. The arithmetic average roughness Ra is measured in accordance with Examples to be described later. Measurement conditions to be described later are employed.

On the other hand, for example, when the skin layer 4 has the predetermined surface roughness (B), the arithmetic average roughness Ra of the surface of the skin layer 4 is 10 µm or less, preferably 8.0 µm or less, more preferably 6.0 µm or less, further preferably 5.0 µm or less, particularly preferably 4.0 µm or less. Further, the arithmetic average roughness Ra of the surface of the skin layer 4 is more than 0 µm, preferably 0.10 µm or more, preferably 0.5 µm or more, more preferably 1.0 µm or more, further preferably 1.5 µm or more. The arithmetic average roughness Ra is measured in accordance with Examples to be described later. The following measurement conditions are employed.

Measurement conditions of arithmetic average roughness Ra; a spherical contact having a diameter ϕ of 1.6 mm, a specification load of 0.4 gf, a measurement length of 40 mm, a cutoff wavelength of 0.8 mm, and a measurement speed of 0.15 mm/sec.

When the skin layer 4 has the above-described predetermined surface roughness (B), the modulus of the skin layer 4 is not particularly limited and is appropriately set in accordance with the purpose and use. For example, the 100% modulus of the skin layer 4 is, for example, 15.0 MPa or less, preferably 10.0 MPa or less, more preferably 7.0 MPa or less. Further, the 100% modulus of the skin layer 4 is, for example, 0.1 MPa or more, preferably 0.5 MPa or more, more preferably 1.0 MPa or more, further preferably 1.5 MPa or more, particularly preferably 2.0 MPa or more. The 100% modulus is a stress value at 100% elongation. In particular, even if the 100% modulus of the skin layer 4 has a relatively high value (e.g., more than 5.0 MPa), an excellent texture is provided when the modulus of the surface of the skin layer 4 is within the above range.

The skin layer 4 has a storage modulus (E'_{coat}) at 23°C of, for example, 1 MPa or more, preferably 3 MPa or more, more preferably 5 MPa or more, further preferably 10 MPa or more. Further, the storage modulus (E'_{coat}) at 23°C of the skin layer 4 is, for example, 100 MPa or less, preferably 70 MPa or less, more preferably 50 MPa or less, further preferably 30 MPa or less, particularly preferably 20 MPa or less.

The ratio (E'_{coat}/E'_{gel}) of the storage modulus (E'_{coat}) at 23°C of the skin layer 4 to the storage modulus (E'_{gel}) at 23°C of the gel layer 3 is, for example, 0.1 or more, preferably 1 or more, more preferably 10 or more, further preferably 50 or more. Further, the ratio (E'_{coat}/E'_{gel}) of the storage modulus (E'_{coat}) at 23°C of the skin layer 4 to the storage modulus (E'_{gel}) at 23°C of the gel layer 3 is, for example, 2000 or less, preferably 1000 or less, more preferably 500 or less, further preferably 300 or less.

When the ratio (E'_{coat}/E'_{gel}) of the storage modulus (E'_{coat}) at 23°C of the skin layer 4 to the storage modulus (E'_{gel}) at 23°C of the gel layer 3 is within the above range, a buffer material 1 having a more excellent texture can be produced.

The skin layer 4 has an average thickness of, for example, 1 µm or more, preferably 10 µm or more, more preferably 20 µm or more, further preferably 50 µm or more, particularly preferably 70 µm or more, in view of providing a more excellent texture. Further, the average thickness of the skin layer 4 is, for example, 2000 µm or less, preferably 1000 µm or less, more preferably 700 µm or less, even more preferably 300 µm or less, particularly preferably 150 µm or less, in view of providing a more excellent texture.

The ratio of the average thickness of the skin layer 4 to the average thickness of the gel layer 3 (average thickness of skin layer 4 /average thickness of gel layer 3) is, for example, 0.0001 or more, preferably 0.001 or more. Further, the ratio of the average thickness of the skin layer 4 to the average thickness of the gel layer 3 (average thickness of skin layer 4 /average thickness of gel layer 3) is, for example, 1 or less, preferably 0.1 or less. When the ratio of the average thickness is within the above range, a buffer material 1 having a more excellent texture can be produced.

The buffer material 1 can further include a foam layer 5. The foam layer 5 is disposed in contact with the gel layer 3, for example, on the other surface opposing to one surface of the gel layer 3. In other words, the foam layer 5 is laminated on the gel layer 3 on the opposite side of the skin layer 4. That is, the foam layer 5 is laminated on the gel layer 3 on the backside (the lower side on the plane of the sheet) of the gel layer 3.

Examples of the foam layer 5 include a known foam, and preferably, a foamed polyurethane is used. The foam layer 5 more preferably consists of a foamed polyurethane. The foamed polyurethane provides excellent elasticity.

To be more specific, examples of the foamed polyurethane include polyurethane foam and foam elastomer. For the foamed polyurethane, preferably, polyurethane foam is used. Examples of polyurethane foam includes flexible foam and rigid foam.

The flexible foam and rigid foam are distinguished by hardness. Flexible foam has an asker F hardness of, for example, 1 or more, preferably 10 or more. Further, flexible foam has an asker F hardness of, for example, 90 or less, preferably 70 or less. Meanwhile, rigid foam has an asker F hardness of, for example, more than 90. As the polyurethane foam, preferably, flexible foam is used.

The foamed polyurethane may be obtained, for example, as a commercially available product.

The foam layer 5 has a storage modulus (E'_{foam}) at 23°C of, for example, 0.01 MPa or more, preferably 0.03 MPa or more, more preferably 0.05 MPa or more, further preferably 0.10 MPa or more. Further, the storage modulus (E'_{foam}) at 23°C of the foam layer 5 is, for example, 5.0 MPa or less, preferably 1.0 MPa or less, more preferably 0.8 MPa or less, further preferably 0.5 MPa or less, particularly preferably 0.3 MPa or less.

The ratio (E'_{coat}/E'_{foam}) of the storage modulus (E'_{coat}) at 23°C of the skin layer 4 to the storage modulus (E'_{foam}) at 23°C of the foam layer 5 is, for example, 0.1 or more, preferably 1.0 or more, more preferably 10 or more, further preferably 50 or more. Further, the ratio (E'_{coat}/E'_{foam}) of the storage modulus (E'_{coat}) at 23°C of the skin layer 4 to the storage modulus (E'_{foam}) at 23°C of the foam layer 5 is, for example, 2000 or less, preferably 1000 or less, more preferably, 500 or less, even more preferably 300 or less, particularly preferably 200 or less.

The ratio (E'_{gel}/E'_{foam}) of the storage modulus (E'_{gel}) at 23°C of the gel layer 3 to the storage modulus (E'_{foam}) at 23°C of the foam layer 5 is 0.1 or more, preferably 0.2 or more, more preferably 0.4 or more, further preferably 0.8 or more. Further, the ratio (E'_{gel}/E'_{foam}) of the storage modulus (E'_{gel}) at 23°C of the gel layer 3 to the storage modulus (E'_{foam}) at 23°C of the foam layer 5 is less than 10, preferably 5 or less, more preferably 3 or less, further preferably 2 or less.

The average thickness of the foam layer 5 is set in accordance with the type of the forming mold and the like. The average thickness of the foam layer 5 is, for example, 500 µm or more, preferably 1000 µm or more, more preferably 5000 µm or more, in view of providing a more excellent texture. Further, the average thickness of the foam layer 5 is, for example, 50000 µm or less, preferably 20000 µm or less, more preferably 15000 µm or less, in view of providing a more excellent texture.

The ratio of the average thickness of the foam layer 5 to the average thickness of the gel layer 3 (average thickness of foam layer 5 /average thickness of gel layer 3) is, for example, 0.1 or more, preferably 1 or more. Further, the ratio of the average thickness of the foam layer 5 to the average thickness of the gel layer 3 (average thickness of foam layer 5 /average thickness of gel layer 3) is, for example, 40 or less, preferably 10 or less.

The foam layer 5 has a density of, for example, 10 kg/m³ or more, preferably 50 kg/m³ or more, more preferably 80 kg/m³ or more, in view of providing a more excellent texture. Further, the density of the foam layer 5 is, for example, 500 kg/m³ or less, preferably 200 kg/m³ or less, more preferably 150 kg/m³ or less, in view of providing a more excellent texture.

For example, the foam layer 5 is bonded to the gel layer 3 by a known method. For example, the gel layer 3 is bonded to the foam layer 5 by the tackiness of the gel layer 3. Alternatively, for example, the gel layer 3 is bonded to the foam layer 5 through a known adhesive. Preferably, the gel layer 3 is bonded to the foam layer 5 by the tackiness of the gel layer 3.

The above-described buffer material includes a gel layer having a predetermined storage modulus and a skin layer disposed on one surface of the gel layer. The skin layer has a 100% modulus of less than a predetermined value, and/or the skin layer has a fine uneven structure in a surface thereof and the surface of the skin layer has an arithmetic average roughness Ra of less than a predetermined value. Therefore, the buffer material, exterior material, and robot component according to the present invention have an excellent texture.

Therefore, the buffer material 1 is suitably used, for example, in various industrial fields. Examples of the industrial fields include the field of exterior materials. The exterior material is a member to be attached to the outside of various living bodies and/or products. To be more specific, examples of the field of exterior materials include the field of furniture, the field of automatic motion machine (robotics), and the field of sports. Examples of the use of the buffer material 1 in the field of furniture include furniture corner guards, cushioned carpets, and anti-collision cushions. Examples of the use of the buffer material 1 in the in the field of robotics include buffer materials for factory robots, buffer materials for building management robots, buffer materials for personal guide robots, buffer materials for communication robots, and buffer materials for nursing care robots. Examples of the use of the buffer material 1 in the field of sports include protectors for ball games and protectors for martial arts. The buffer material 1 has an excellent texture and thus is particularly preferably used in the field of automatic motion machine (robotics). That is, the buffer material is particularly preferably a buffer material for robots.

That is, the above-described buffer material is preferably included in the exterior material, and more preferably in the robot component. The robot component includes, for example, a mechanical part of a robot (e.g., a robot arm) and the above-described buffer material that covers the mechanical part. Such robot component includes a gel layer having a predetermined storage modulus and a skin layer disposed on one surface of the gel layer. The skin layer has a 100% modulus of less than a predetermined value. Therefore, the exterior material and robot component described above have an excellent texture.

As a result, the above-described robot component is suitably used, in particular, as a component for a robot (a collaborative robot) that collaborates with humans.

In FIG. 1, the gel layer 3 is formed only on a front surface of the foam layer 5. Further, in FIG. 1, the skin layer 4 is formed only on a front surface of the gel layer 3. However, for example, the gel layer 3 may be formed on the front surface, back surface, and side surface of the foam layer 5. Alternatively, for example, the skin layer 4 may be formed on the front surface and side surface of the gel layer 3. Alternatively, the gel layer 3 and the skin layer 4 may be formed on the front surface and back surface of the foam layer 5 while not formed on the side surface of the foam layer 5.

### Example

Next, the present invention is described with reference to Examples and Comparative Examples. The present invention is however not limited by the following Examples. The "parts" and "%" are based on mass unless otherwise specified. The specific numerical values in blending ratio (content ratio), property value, and parameter used in the following description can be replaced with upper limit values (numerical values defined as "or less" or "below") or lower limit values (numerical values defined as "or more" or "above") of corresponding numerical values in blending ratio (content ratio), property value, and parameter described in the above-described "DESCRIPTION OF THE EMBODIMENTS".

### [Embodiment 1 (Modulus)]

### Synthesis Example 1 Skin-Isocyanate Component (Isocyanate Group-Terminated Prepolymer (A1))

Into a reactor equipped with a thermometer, a stirrer, a nitrogen inlet tube, and a condenser tube, 500 parts by mass of hexamethylene diisocyanate (HDI, trade name: TAKENATE 700, manufactured by Mitsui Chemicals, Inc.), 0.25 parts by mass of 2,6-di(tert-butyl)-4-methylphenol (also known as dibutyl hydroxytoluene, BHT, hindered phenol antioxidant), and 0.25 parts by mass of tetraphenyl dipropylene glycol diphosphite (organic phosphite ester, auxiliary catalyst) were charged in a nitrogen atmosphere, and then mixed. To the resulting liquid mixture, 10.7 parts by mass of 1,3-butanediol was added, and nitrogen was further introduced for 1 hour. Then, the temperature of the liquid mixture was increased to 80°C, and the liquid mixture was allowed to react for 3 hours. Then, the temperature of the liquid mixture was lowered to 60°C. Thereafter, 0.2 parts by mass of trimethyl-N-2-hydroxypropylammonium 2-ethylhexanoate (isocyanurate-formation catalyst) was added to the liquid mixture and allowed to react for 1.5 hours. Further, 0.05 parts by mass of o-toluenesulfonamide was added to the liquid mixture. The liquid mixture was then distilled in a thin-film distillation device (temperature 150°C, degree of vacuum 93.3 Pa) to adjust the remaining amount of the HDI monomer to 1.0% or less.

In this manner, an isocyanurate derivative of hexamethylene diisocyanate was produced as a first raw material polyisocyanate. The isocyanurate derivative had an isocyanate group content of 20.7% by mass and an average number of isocyanate groups of 3.4.

Into a reactor equipped with a thermometer, a stirrer, a nitrogen inlet tube, and a condenser tube, 1000 parts by mass of caprolactone diol (trade name: PLACCEL 210, manufactured by Daicel Corporation) and 33 parts by mass of 1,6-hexanediol were charged in a nitrogen atmosphere, and then mixed. In this manner, a first raw material polyol was produced.

The temperature of the first raw material polyol was maintained at 80°C in the reactor. Then, 914 parts by mass of the first raw material polyisocyanate was added in portions into the reactor. The temperature in the reactor was maintained at 85°C or less. After the addition, the temperature in the reactor was maintained at 80±5°C, and the first raw material polyisocyanate and the first raw material polyol were allowed to react for 5 hours. The equivalent ratio (NCO/OH) of the isocyanate group in the first raw material polyisocyanate to the hydroxy group in the first raw material macropolyol was 1.76.

In this manner, an isocyanate group-terminated prepolymer (A1) was produced as a skin-isocyanate component.

### Synthesis Example 2 Skin-Polyol Component (Polyurethane Polyol (B1))

Into a reactor equipped with a thermometer, a stirrer, a nitrogen inlet tube, and a condenser tube, 266 parts by mass of 1,6-hexamethylene carbonate diol (second raw material polyol, polycarbonate polyol using 1,6-hexanediol as an initiator, trade name DURANOL T6001, manufactured by Asahi Kasei Corporation) was charged in a nitrogen atmosphere, and the temperature in the reactor was maintained at 80°C.

Next, 13.8 parts by mass of isophorone diisocyanate (second raw material polyisocyanate) was added in portions into the reactor. The temperature in the reactor was maintained at 85°C or less. After the addition, the temperature in the reactor was maintained at 80±5°C, and the second raw material polyisocyanate and the second raw material polyol were allowed to react for 5 hours. The equivalent ratio (OH/NCO) of the hydroxy group in the second raw material macropolyol to the isocyanate group in the second raw material polyisocyanate was 4.3.

Next, the temperature of the liquid reaction product was lowered to 50°C. Thereafter, 594 parts by mass of methyl isobutyl ketone, 81 parts by mass of methyl ethyl ketone, and 45 parts by mass of toluene were added to the liquid reaction product.

In this manner, a polyurethane polyol (B1) was produced as the skin-polyol component.

### Synthesis Example 3 Skin-Polyol Component (Polyurethane Polyol (B2))

In a reactor equipped with a thermometer, a stirrer, a nitrogen inlet tube, and a condenser tube, 246 parts by mass of caprolactone diol (second raw material polyol, trade name: PLACCEL 210, manufactured by Daicel Corporation), 0.6 parts by mass of ethylene glycol, 9 parts by mass of 1,4-butanediol, and 3.7 parts by mass of trimethylolpropane were mixed in a nitrogen atmosphere, and the temperature in the reactor was maintained at 80°C.

Next, 20.4 parts by mass of isophorone diisocyanate (second raw material polyisocyanate) was added in portions into the reactor. The temperature in the reactor was maintained at 85°C or less. After the addition, the temperature in the reactor was maintained at 80±5°C, and the second raw material polyisocyanate and the second raw material polyol were allowed to react for 5 hours. The equivalent ratio (OH/NCO) of the hydroxy group in the second raw material macropolyol to the isocyanate group in the second raw material polyisocyanate was 4.2.

Next, the temperature of the liquid reaction product was lowered to 50°C. Thereafter, 205 parts by mass of methyl isobutyl ketone, 185 parts by mass of methyl ethyl ketone, and 330 parts by mass of toluene were added to the liquid reaction product.

In this manner, a polyurethane polyol (B2) was produced as the skin-polyol component.

### Example 1

### (1) Uneven Processing of Mold

A mold having inside dimensions of 120 mm × 120 mm × 2 mm was prepared. An inner surface of the mold was satin-finished on one side. That is, a fine uneven structure was formed on one side of the inner surface of the mold. The arithmetic average roughness Ra of the inner surface of the mold on one side was measured in accordance with JIS B 0601 (2001), and by a method and conditions to be described later. The arithmetic average roughness Ra of the inner surface of the mold on one side was 10 µm.

### (2) Skin Layer

Mixed were 100 parts by mass of the polyurethane polyol (B1) as the skin-polyol component (main component), 5 parts by mass of the isocyanate group-terminated prepolymer (A1) as the skin-isocyanate component (curing agent), and 150 parts by mass of a mixed solvent (50 parts by mass of methyl ethyl ketone and 50 parts by mass of ethyl acetate) to produce a coating liquid.

The above-described coating liquid was applied to and dried on the inner surface of the mold on one side. In this manner, a skin layer consisting of polyurethane resin was produced. The film thickness was adjusted by the number of coatings. The fine uneven structure of the mold was transferred to the skin layer. That is, the fine uneven structure was formed in the skin layer. The skin layer had an average thickness of 100 µm. The arithmetic average roughness Ra of the skin layer was measured according to the method and conditions to be described later. The arithmetic average roughness Ra of the skin layer was 3.6 µm.

### (3) Gel Layer

The following components were stirred using a three-one motor to produce a resin premix.
PTXG-1800 (Polytetramethylene ether polyol, a copolymer of tetrahydrofuran and neopentyl glycol, noncrystalline polytetramethylene ether glycol, a number average molecular weight of 1800, an average hydroxy value of 60 mg KOH/g, an average functionality of 2, manufactured by Asahi Kasei Corporation) 100 parts by mass
Hexamoll DINCH (Plasticizer, a hydrogenated diisononyl phthalate, manufactured by BASF Japan Ltd.) 127.15 parts by mass
Dibutyltin dilaurate (Urethane-forming catalyst, dibutyltin(IV) dilaurate, Tokyo Chemical Industry Co., Ltd.) 0.024 parts by mass
BYK-088 (Antifoaming agent, a silicone-based surfactant, manufactured by BYK Japan KK) 0.24 parts by mass

Next, the following components were stirred using a three-one motor and vacuum defoamed to produce a mixture.
The above-described resin premix 100 parts by mass
STABiO D-370N (Isocyanurate derivative of pentamethylene diisocyanate, manufactured by Mitsui Chemicals, Inc.) 4.66 parts by mass
Equivalent ratio (NCO/active hydrogen group): 0.583

An amount 28.8 g of the above-described mixture was carefully poured, in order not to form bubbles, into the mold in which the skin layer was formed, and cured in an 80°C oven for 1 hour. Thereafter, the molded product was removed from the mold, thereby producing a skinned polyurethane gel. The gel layer had an average thickness of 2000 µm.

### (4) Foam Layer

As a foamed polyurethane, Tera Venus WS (trade name, manufactured by Yukigaya Chemical Industry Co., Ltd., an average thickness of 10 mm (10000 µm)) was prepared. This was used as a foam layer.

### (5) Buffer Material

The skinned polyurethane gel and the foam layer were bonded together by the tackiness of the gel layer. In this manner, a buffer material including a foam layer, a gel layer, and a skin layer was produced.

### Example 2

Polyurethane polyol (B2) was used instead of polyurethane polyol (B1). Other than this, a buffer material was produced in the same manner as in Example 1. The skin layer had an average thickness of 100 µm. The arithmetic average roughness Ra of the skin layer was measured according to the method and conditions to be described later. The arithmetic average roughness Ra of the skin layer was 5.91 µm.

### Comparative Example 1

As the coating liquid, a commercially available FORTIMO XSP-659 (a bis(isocyanatomethyl) cyclohexane solution, a solids concentration of 16%, manufactured by Mitsui Chemicals, Inc.) was used. Other than this, a buffer material was produced in the same manner as in Example 1. The skin layer had an average thickness of 100 µm. The arithmetic average roughness Ra of the skin layer was measured according to the method and conditions to be described later. The arithmetic average roughness Ra of the skin layer was 5.3 µm.

### <Physical Properties>

### (1) Storage Modulus

The storage modulus (E'_{gel}) of the gel layer and the storage modulus (E'_{foam}) of the foam layer of the buffer material were obtained by the following method.

That is, the temperature dependency of dynamic viscoelasticity of the gel layer was measured with a dynamic viscoelasticity device (manufactured by IT Measurement Control Co., Ltd., Model: DVA-200) under the conditions of a tensile mode, a frequency of 10 Hz, and a temperature increase rate of 5°C/min. The storage modulus at 23°C was defined as the storage modulus (E'_{gel}) of the gel layer.

Further, a 20 mm × 20 mm × 10 mm sample was cut from the core of the foam layer, and the temperature dependency of dynamic viscoelasticity of the sample was measured with a dynamic viscoelasticity device (manufactured by IT Measurement Control Co., Ltd., Model: DVA-220) under the conditions of a compression mode, a frequency of 10 Hz, and a temperature increase rate of 5°C/min. The storage modulus at 23°C was defined as the storage modulus (E'_{gel}) of the gel layer.

Further, the storage modulus (E'_{coat}) of the skin layer was obtained in the same manner as the production of the gel layer.

### (2) 100% Modulus

A skin sample having an average thickness of 0.04 mm was produced by drying a coating liquid containing polyurethane resin. A fine uneven structure was not formed in the skin sample.

Next, the stress value (tensile strength) of the skin sample at 100% elongation was measured in accordance with the tensile test method described in JIS K 7312 (1996). This tensile strength was defined as the 100% modulus of the skin layer. A tensile tester, trade name RTG-1310 (manufactured by A&D Company, Limited), was used. A No. 3 dumbbell was used as the test piece. The tensile speed was set at 100 mm/min.

### (3) Arithmetic Average Roughness Ra of Surface

The arithmetic average roughness Ra of the surface of the skin layer in the buffer material was determined by the following method. Further, the arithmetic average roughness Ra of the inner surface of the mold was determined by the following method.

That is, the arithmetic average roughness Ra was measured by a surface roughness measuring instrument (surface roughness and contour measuring instrument SURFCOM 1400D, manufactured by Tokyo Seimitsu Co. Ltd.). The measurement conditions were set as follows.

Measurement conditions of arithmetic average roughness Ra of skin layer; a spherical contact having a diameter ϕ of 1.6 mm, a specification load of 0.4 gf, a measurement length of 40 mm, a cutoff wavelength of 0.8 mm, and a measurement speed 0.15 mm/sec.

Measurement conditions of arithmetic average roughness Ra of inner surface of mold; a spherical contact having a diameter ϕ of 1.6 mm, a specification load of 0.4 gf, a measurement length of 40 mm, a cutoff wavelength of 8 mm, and a measurement speed 0.15 mm/sec.

### <Evaluation>

### (1) Friction Test

The dynamic friction coefficient of the surface of the skin layer in the buffer material was measured by a tactile meter (Tribo Gear Type 33, manufactured by Shinto Scientific Co., Ltd.) equipped with a handy probe. The measurement conditions were set as follows.

Handy probe tip size of ϕ12mm, a measurement load of 20 gf, no sliding speed setting

### (1) Texture Test

The forefinger was slid against the surface of the skin layer in the buffer material. The smoothness in sliding was then evaluated based on the following criteria.

○: No unevenness is felt. The finger easily slides.
Δ: A little unevenness is felt. The finger easily slides.
×: Unevenness is felt. The finger does not easily slide.

### [Table 1]

**TABLE 1**

| No. | | | Ex. 1 | Ex. 2 | Comp. Ex. 1 |
|---|---|---|---|---|---|
| Skin layer | Average thickness | µm | 100 | 100 | 100 |
| | 100% modulus | MPa | 3.32 | 4.76 | 6.36 |
| | Storage modulus (23°C) | MPa | 16 | 29 | 16 |
| | Arithmetic average roughness Ra of surface | µm | 3.6 | 5.91 | 5.3 |
| Gel layer | Average thickness | µm | 2000 | 2000 | 2000 |
| | Storage modulus (23°C) | MPa | 0.24 | 0.24 | 0.24 |
| | Density | Kg/m³ | 970 | 970 | 970 |
| Foam layer | Average thickness | µm | 10000 | 10000 | 10000 |
| | Storage modulus (23°C) | MPa | 0.13 | 0.13 | 0.13 |
| | Density | Kg/m³ | 120 | 120 | 120 |
| Evaluation | Dynamic friction coefficient | - | 1.11 | 0.63 | 0.83 |
| | Texture | - | ○ | ○ | × |

### [Embodiment 2 (Surface Roughness)]

### Example 3

### (1) Uneven Processing of Mold

A mold having inside dimensions of 120 mm × 120 mm × 2 mm was prepared. An inner surface of the mold was satin-finished on one side. That is, a fine uneven structure was formed on one side of the inner surface of the mold. The arithmetic average roughness Ra of the inner surface of the mold on one side was measured in accordance with JIS B 0601 (2001), and by a method and conditions to be described later. The arithmetic average roughness Ra of the inner surface of the mold on one side was 3.5 µm.

### (2) Skin Layer

As the coating liquid containing polyurethane resin, FORTIMO XSP-659 (a bis(isocyanatomethyl) cyclohexane solution, a solids concentration of 16%, manufactured by Mitsui Chemicals, Inc.) was prepared.

The above-described coating liquid was applied to and dried on the inner surface of the mold on one side. In this manner, a skin layer consisting of polyurethane resin was produced. The fine uneven structure of the mold was transferred to the skin layer.

That is, a fine uneven structure was formed in the skin layer. The skin layer had an average thickness of 100 µm. The arithmetic average roughness Ra of the skin layer was measured according to the method and conditions to be described later. The arithmetic average roughness Ra of the skin layer was 1.5 µm.

### (3) Gel Layer

The following components were stirred using a three-one motor to produce a resin premix.
PTXG-1800 (Polytetramethylene ether polyol, a copolymer of tetrahydrofuran and neopentyl glycol, noncrystalline polytetramethylene ether glycol, a number average molecular weight of 1800, an average hydroxy value of 60 mg KOH/g, an average functionality of 2, manufactured by Asahi Kasei Corporation) 100 parts by mass
Hexamoll DINCH (Plasticizer, a hydrogenated diisononyl phthalate, manufactured by BASF Japan Ltd.) 127.15 parts by mass
Dibutyltin dilaurate (Urethane-forming catalyst, dibutyltin(IV) dilaurate, Tokyo Chemical Industry Co., Ltd.) 0.024 parts by mass
BYK-088 (Antifoaming agent, a silicone-based surfactant, manufactured by BYK Japan KK) 0.24 parts by mass

Next, the following components were stirred using a three-one motor and vacuum defoamed to produce a mixture.
The above-described resin premix 100 parts by mass
STABiO D-370N (Isocyanurate derivative of pentamethylene diisocyanate, manufactured by Mitsui Chemicals, Inc.) 4.66 parts by mass
Equivalent ratio (NCO/active hydrogen group): 0.583

An amount 28.8 g of the above-described mixture was carefully poured, in order not to form bubbles, into the mold in which the skin layer was formed, and cured in an 80°C oven for 1 hour. Thereafter, the molded product was removed from the mold, thereby producing a skinned polyurethane gel. The gel layer had an average thickness of 2000 µm.

### (4) Foam Layer

As a foamed polyurethane, Tera Venus WS (trade name, manufactured by Yukigaya Chemical Industry Co., Ltd., an average thickness of 10 mm (10000 µm)) was prepared. This was used as a foam layer.

### (5) Buffer Material

The skinned polyurethane gel and the foam layer were bonded together by the tackiness of the gel layer. In this manner, a buffer material including a foam layer, a gel layer, and a skin layer was produced.

### Example 4

In the uneven processing of the mold, the arithmetic average roughness Ra of the inner surface of the mold was adjusted to 7.0 µm. Other than this, a buffer material was produced in the same manner as in Example 3. The arithmetic average roughness Ra of the skin layer was measured according to the method and conditions to be described later. The arithmetic average roughness Ra of the skin layer was 3.6 µm.

### Example 5

In the uneven processing of the mold, the arithmetic average roughness Ra of the inner surface of the mold was adjusted to 10.0 µm. Other than this, a buffer material was produced in the same manner as in Example 3. The arithmetic average roughness Ra of the skin layer was measured according to the method and conditions to be described later. The arithmetic average roughness Ra of the skin layer was 5.3 µm.

### Comparative Example 2

The inner surface of the mold was not subjected to uneven processing. Other than this, a buffer material was produced in the same manner as in Example 3.

### <Physical Properties>

### (1) Storage Modulus

The storage modulus (E'_{gel}) of the gel layer and the storage modulus (E'_{foam}) of the foam layer of the buffer material were obtained by the following method.

That is, the temperature dependency of dynamic viscoelasticity of the gel layer was measured with a dynamic viscoelasticity device (manufactured by IT Measurement Control Co., Ltd., Model: DVA-200) under the conditions of a tensile mode, a frequency of 10 Hz, and a temperature increase rate of 5°C/min. The storage modulus at 23°C was defined as the storage modulus (E'_{gel}) of the gel layer.

Further, a 20 mm × 20 mm × 10 mm sample was cut from the core of the foam layer, and the temperature dependency of dynamic viscoelasticity of the sample was measured with a dynamic viscoelasticity device (manufactured by IT Measurement Control Co., Ltd., Model: DVA-220) under the conditions of a compression mode, a frequency of 10 Hz, and a temperature increase rate of 5°C/min. The storage modulus at 23°C was defined as the storage modulus (E'_{gel}) of the gel layer.

Further, the storage modulus (E'_{coat}) of the skin layer was obtained in the same manner as the production of the gel layer.

### (2) Arithmetic Average Roughness Ra of Surface

The arithmetic average roughness Ra of the surface of the skin layer in the buffer material was determined by the following method. Further, the arithmetic average roughness Ra of the inner surface of the mold was determined by the following method.

That is, the arithmetic average roughness Ra was measured by a surface roughness measuring instrument (surface roughness and contour measuring instrument SURFCOM 1400D, manufactured by Tokyo Seimitsu Co. Ltd.). The measurement conditions were set as follows.

Measurement conditions of arithmetic average roughness Ra of skin layer; a spherical contact having a diameter ϕ of 1.6 mm, a specification load of 0.4 gf, a measurement length of 40 mm, a cutoff wavelength of 0.8 mm, and a measurement speed 0.15 mm/sec.

Measurement conditions of arithmetic average roughness Ra of inner surface of mold; a spherical contact having a diameter ϕ of 1.6 mm, a specification load of 0.4 gf, a measurement length of 40 mm, a cutoff wavelength of 8 mm, and a measurement speed 0.15 mm/sec.

### <Evaluation>

### (1) Friction Test

The dynamic friction coefficient of the surface of the skin layer in the buffer material was measured by a tactile meter (Tribo Gear Type 33, manufactured by Shinto Scientific Co., Ltd.) equipped with a handy probe. The measurement conditions were set as follows.

Handy probe tip size of ϕ12mm, a measurement load of 20 gf, no sliding speed setting

### (2) Texture Test

The forefinger was slid against the surface of the skin layer in the buffer material. The smoothness in sliding was then evaluated based on the following criteria.

○: No unevenness is felt. The finger easily slides.
Δ: Unevenness is felt. The finger does not easily slide.
×: Unevenness is felt. The finger hardly slides.

### [Table 2]

**TABLE 2**

| No. | | | Ex. 3 | Ex. 4 | Ex. 5 | Comp. Ex. 2 |
|---|---|---|---|---|---|---|
| Skin layer | Coating liquid | | XSP-659 | XSP-659 | XSP-659 | XSP-659 |
| | Average thickness | µm | 100 | 100 | 100 | 100 |
| | Storage modulus (23°C) | MPa | 16 | 16 | 16 | 16 |
| | Arithmetic average roughness Ra of surface | µm | 1.5 | 3.6 | 5.3 | 0.0 |
| Gel layer | Average thickness | µm | 2000 | 2000 | 2000 | 2000 |
| | Storage modulus (23°C) | MPa | 0.24 | 0.24 | 0.24 | 0.24 |
| | Density | Kg/m³ | 970 | 970 | 970 | 970 |
| Foam layer | Average thickness | µm | 10000 | 10000 | 10000 | 10000 |
| | Storage modulus (23°C) | MPa | 0.13 | 0.13 | 0.13 | 0.13 |
| | Density | Kg/m³ | 120 | 120 | 120 | 120 |
| Evaluation | Dynamic friction coefficient | - | 0.79 | 0.78 | 0.83 | 2.93 |
| | Texture | - | ○ | ○ | Δ | × |

### Description of Reference Numerals

- 1: buffer material
- 2: skinned polyurethane gel
- 3: gel layer
- 4: skin layer
- 5: foam layer

## Claims

1. A buffer material comprising a gel layer and a skin layer, wherein
the gel layer comprises a polyurethane gel,
the gel layer having a storage modulus (E'_{gel}) at 23°C of 0.01 MPa or more and 10 MPa or less,
the skin layer is disposed on one surface of the gel layer,
the skin layer having a 100% modulus of 5.0 MPa or less,
and/or
the skin layer having a fine uneven structure in a surface thereof, and
the surface of the skin layer having an arithmetic average roughness Ra of more than 0 µm and 10 µm or less, as measured according to the following conditions:
Measurement conditions of arithmetic average roughness Ra; a spherical contact having a diameter ϕ of 1.6 mm, a specification load of 0.4 gf, a measurement length of 40 mm, a cutoff wavelength of 0.8 mm, and a measurement speed of 0.15 mm/sec.

2. The buffer material according to claim 1, wherein the skin layer has an average thickness of 10 µm or more and 1000 µm or less.

3. The buffer material according to claim 1,
further comprising a foam layer, wherein
the foam layer is disposed on an other surface opposing to one surface of the gel layer,
the foam layer has an average thickness of 1000 µm or more and 50000 µm or less, and
the gel layer has an average thickness of 500 µm or more and 10000 µm or less.

4. The buffer material according to claim 3, wherein
the foam layer has a density of 80 kg/m³ or more and 200 kg/m³ or less, and
the gel layer has a density of 500 kg/m³ or more and 1200 kg/m³ or less.

5. An exterior material comprising the buffer material according to claim 1.

6. A robot component comprising the buffer material according to claim 1.
